# FASCICULE DE BREVET EUROPEEN

(11) **EP 2 439 425 B1**
(45) Date de publication et mention de la délivrance du brevet: **04.12.2013**
(21) Numéro de dépôt: 11184455.1
(22) Date de dépôt: 10.10.2011
(51) Int. Cl.: F16F 15/023, B64D 27/26

(54) **Dispositif de liaison de sécurité et aéronef équipé d?un tel dispositif de liaison de sécurité**
Sicherheitsverbindungsvorrichtung und mit einer solchen Sicherheitsverbindungsvorrichtung ausgestattetes Flugzeug
Security linking device and aircraft provided with such a security linking device

(30) Priorité: 11.10.2010 FR 1058220
(43) Date de publication de la demande: 11.04.2012
(73) Titulaire: Airbus Operations, 31060 Toulouse (FR)
(72) Inventeur: Bonnet, Mathieu, 31000 Toulouse (FR); Valery, Benoit, 31140 Saint Alban (FR)
(74) Mandataire: Santarelli

(56) Documents cités:
- EP-A1- 0 501 658
- EP-A1- 1 571 080
- WO-A1-99/06734
- DE-A1-102008 045 492
- FR-A- 1 039 712
- FR-A1- 2 689 951
- FR-A1- 2 761 745
- US-A- 5 174 552

## Description

La présente invention concerne un dispositif de liaison de sécurité. Elle concerne aussi un aéronef équipé d'un tel dispositif de liaison de sécurité.

Dans l'état de la technique, il est connu d'utiliser des ensembles bielle-manille pour relier un premier corps vibrant d'une structure à un second corps de cette structure, par exemple le moteur d'un véhicule à une pièce du véhicule. Plus particulièrement, des ensembles bielle-manille sont utilisés entre une charge aéronautique comme un turbo réacteur et un élément structurel comme un mat d'accrochage sur l'aéronef. L'accrochage entre la structure de l'aéronef et le moteur est réalisé à l'aide d'une manille qui prend les efforts selon un axe et au moins une bielle ou biellette qui reprend les efforts dans un plan contenant l'axe de la manille.

Par ailleurs, il est aussi connu dans l'état de la technique d'utiliser des montages à sécurité de défaillance (également couramment appelée « fail safe » en terminologie anglo-saxonne) dans lesquels les éléments de liaison sont doublés en parallèle de sorte que, lorsque l'un des deux éléments est brisé, l'autre élément peut continuer à remplir leur fonction commune dans le dispositif de liaison.

Notamment dans le cas d'un accrochage utilisant une manille et une bielle, on sait doubler la manille, mais seulement de manière rigide. A cause de la rigidité de la manille, les vibrations, produites notamment par le fonctionnement de la charge, sont transmises jusque dans le mat d'accrochage. Les vibrations produites peuvent ainsi gagner la structure complète de l'avion.

Le document US 5,174,552 décrit un montage fluidique permettant de contrôler les vibrations transmises à travers ce dernier. Il comprend deux chambres remplies de fluide reliées entre elles par un piston placé dans un logement relié à la cloison d'un moteur d'aéronef et fixé à une aile d'aéronef.

La présente invention permet d'apporter un remède à cet inconvénient de l'état de la technique en ce qu'elle concerne un dispositif de liaison de sécurité d'un ensemble bielle-manille reliant un premier corps d'une structure vibrante à un second corps de ladite structure comprenant :
- un premier élément ayant une extrémité de liaison adaptée à être liée audit premier corps, une extrémité de liaison adaptée à être liée audit second corps ;
- un second élément ayant une extrémité de liaison adaptée à être liée audit premier corps, une extrémité de liaison adaptée à être liée audit second corps, les premier et second éléments du dispositif de liaison étant liés entre eux par un moyen fluidique de transfert de vibrations produites par les premier et second corps transmises par les liaisons aux premier et second corps, au moins sous un seuil d'effort déterminé, ledit moyen fluidique de transfert de vibrations comportant au moins deux chambres de pression emplies d'un liquide sous pression, séparées par au moins un piston solidaire du premier ou du second élément

L'invention se caractérise en ce que le moyen fluidique de transfert de vibrations est connecté par des tubulures à distance à un dispositif de filtrage des vibrations comportant un distributeur à deux chambres, connectées auxdites tubulures, et séparées par un piston de distribution soumis à l'action de filtrage des vibrations d'au moins une réserve d'un gaz sous pression déterminée.

Un avantage de cette disposition est de permettre qu'un dispositif de liaison de sécurité, de type dit « fail safe » à deux chemins parallèles de reprise d'efforts, travaille, au moins sous un seuil d'effort déterminé, avec un filtrage des vibrations produites par le premier et/ou le second corps liés et à distance du dispositif de liaison proprement dit ce qui évite des problèmes d'encombrement.

Selon d'autres caractéristiques avantageuses du dispositif de l'invention :
- le premier élément comportant une portion tubulaire s'étendant selon un axe longitudinal et le second élément comportant une portion tubulaire s'étendant selon un axe longitudinal, le moyen fluidique de transfert de vibrations est monté concentriquement de manière déterminée à l'intérieur, à l'extérieur ou à l'une des extrémités des deux portions tubulaires ;

Un avantage de cette disposition est d'apporter une construction compacte au dispositif de liaison de sécurité sans ajouter un grand nombre de pièces.
- les premier et second éléments sont liés de plus par au moins une liaison à jeu fonctionnel calculé de façon à ce que le moyen fluidique de transfert de vibrations soit actif jusqu'à un seuil d'effort déterminé sur le dispositif de liaison ;

Un avantage de cette disposition permet de déterminer précisément le seuil d'effort au-dessous duquel le dispositif de liaison de sécurité peut travailler avec filtrage des vibrations, ce seuil d'effort correspondant à la limite des charges usuelles, dites charges fatigues.
- en pratique, la liaison à jeu fonctionnel calculé comporte au moins un trou oblong pratiqué sur l'un parmi lesdits premier et second éléments destiné à coopérer par un axe ou goupille avec un autre trou de diamètre plus petit que la dimension du trou oblong, le trou de diamètre plus petit étant pratiqué sur l'autre parmi lesdits premier et second éléments de sorte que l'axe ou goupille puisse suivre un mouvement vibratoire dans la direction du trou oblong dans la limite du jeu fonctionnel calculé ;

Un moyen simple et efficace est ainsi mis en oeuvre pour déterminer un jeu fonctionnel définissant le seuil d'effort de limite de filtrage des vibrations.
- le piston de distribution coopère avec un amortisseur fluidique configuré pour amortir les chocs subis par les premier et second éléments ; un avantage de cette disposition est d'effacer le choc ressenti par les premier et second éléments du dispositif de liaison de sécurité lorsque le jeu fonctionnel a atteint ses limites ;
- le réservoir de gaz sous pression du dispositif de filtrage des vibrations est connecté à un tore élastique introduit dans chaque chambre d'air d'une pluralité de chambres de gaz dont le volume est asservi, par une tige et des rondelles associées, aux déplacements du piston de distribution pour filtrer les vibrations transmises par les premier et second éléments dans un mode de filtrage des vibrations ; un avantage de cette disposition est de permettre de répartir l'effort de filtrage des vibrations le long d'une tige solidaire du piston de distribution ;
- entre chaque chambre de gaz, sont disposées :
- une rondelle intérieure solidaire du piston de distribution ;
- une rondelle extérieure solidaire d'une partie de reprise d'efforts du dispositif de filtrage des vibrations ;
les rondelles intérieure et extérieure étant configurées de manière à permettre un filtrage des vibrations dans les deux sens de déplacement du piston de distribution ; un avantage de cette disposition réside dans l'effet bidirectionnel du filtrage qui est efficace dans les deux sens de déplacement de la tige et de la reprise des efforts sur le carter du dispositif de filtrage des vibrations.
- l'amortisseur fluidique coopérant avec le piston de distribution comporte au moins deux chambres séparées par un piston d'amortissement et reliées par une pluralité de passages de fluide d'amortissement ; un avantage de cette disposition est de permettre d'ajouter un amortissement à l'effet de filtrage des vibrations ;
- au moins en un bout de course du piston de distribution, l'amortissement apporté par l'amortisseur du système de mise en pression et de contrôle de pression hydraulique et aéraulique mixte est maximisé par la neutralisation d'une pluralité de passages de fluide d'amortissement ; grâce à cet amortisseur fluidique, il est possible d'annuler, ou à tout le moins de réduire fortement, le choc qui apparaît lorsque l'extension du jeu fonctionnel parvient à l'un au moins de ses extrêmes.

L'invention concerne aussi un aéronef, comportant un dispositif de liaison de sécurité selon l'invention.

D'autres caractéristiques et avantages de la présente invention seront mieux compris à l'aide de la description et des figures parmi lesquelles :
- la Figure 1 est une vue en coupe schématique d'un premier mode de réalisation d'un dispositif de liaison selon l'invention ;
- la Figure 2 représente un premier mode de réalisation d'un ensemble incorporant un dispositif de liaison du mode de réalisation de la Figure 1 ;
- la Figure 3 représente un autre mode de réalisation d'un dispositif de liaison selon la Figure 1 ;
- la Figure 4 représente un mode de réalisation d'une partie d'un dispositif de liaison selon l'invention ;
- les Figures 5 et 6 représentent deux schémas permettant d'expliquer deux modes de fonctionnement de la partie du dispositif de liaison représenté à la Figure 4 ;
- les Figures 7a et 7b représentent deux schémas pour expliquer deux modes de fonctionnement d'une autre partie d'un dispositif de liaison selon l'invention ;
- la Figure 8 représente un second mode de réalisation d'un dispositif de liaison selon l'invention et
- la Figure 9 représente un troisième mode de réalisation d'un dispositif de liaison selon l'invention.

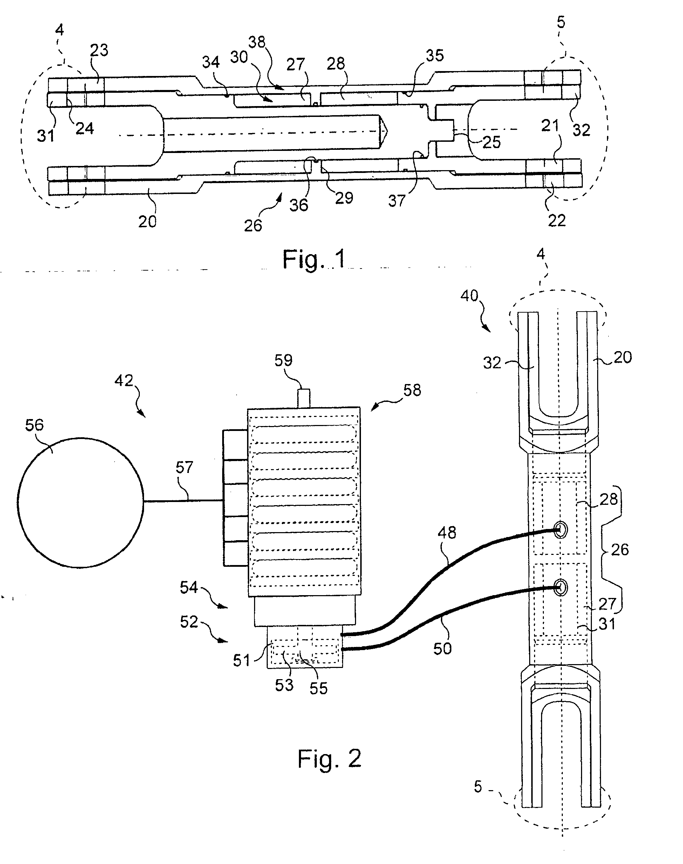

A la Figure 1, on a représenté un premier mode de réalisation d'un dispositif de liaison selon l'invention. Le dispositif de liaison de sécurité comporte principalement un premier élément 20 et un second élément 31. Le premier 20 et le second 31 éléments du dispositif de l'invention sont mécaniquement connectés par un moyen fluidique de transfert de vibrations 26. Le premier 20 et le second 31 éléments présentent au moins chacun une portion tubulaire, première portion tubulaire 38 pour le premier élément 20 et seconde portion tubulaire 30 pour le second élément 31. Dans le mode de réalisation de la Figure 1, de sorte que la première portion tubulaire 38 du premier élément 20 est concentrique et extérieure à la seconde portion tubulaire 30 du second élément 31.

Selon l'invention, le moyen fluidique de transfert de vibrations 26 prend la forme d'un distributeur hydraulique. Il comporte des première 27 et seconde 28 chambres hydrauliques dans lesquelles est injecté un liquide sous pression. Dans un mode particulier de réalisation, le liquide sous pression est un liquide non compressible, comme de l'huile. Il est choisi pour conserver ses propriétés élastiques dans la gamme de températures de travail du dispositif de liaison.

Les deux chambres hydrauliques 27 et 28 sont séparées par un piston annulaire 29. Le piston annulaire 29 est solidaire de l'intérieur d'une portion tubulaire du premier élément 20. Le piston 29 porte un segment racleur 36 qui frotte sur la portion tubulaire 30 en regard du second élément 31. D'autres segments 34-37 sont disposés sur les portions tubulaires de manière à assurer l'étanchéité et une lubrification des parties en contact des premier et second éléments du dispositif de liaison.

Enfin, le second élément proprement dit, 31 à gauche de la Figure 1, est terminé par une tête de second élément 32 qui est montée par un alésage 25 à l'extrémité du premier élément 31. Le second élément proprement dit 31 et sa tête 32 sont liés par un écrou (non représenté) monté sur l'extrémité filetée (filetage non représenté) du second élément 31 proprement dit. L'écrou travaille alors en traction.

Par ailleurs, le dispositif de liaison de la présente invention est relié à un premier corps 4, représenté par des tirets à la gauche de la Figure 1 et à un second corps 5, représenté par des tirets à la droite de la Figure 1. La solidarisation des premier 4 et second 5 corps et du dispositif de liaison de l'invention se fait par un système d'axes ou goupilles. Un axe ou goupille, attaché au premier corps 4, est placé dans un trou circulaire 23 sur le premier élément 20, et dans un trou oblong 24 pratiqué dans le second élément 31.

De la même manière, le second corps 5 est lié à droite de la Figure 1, par un axe ou goupille pénétrant dans un trou circulaire 21 de la tête 32 du second élément et dans un trou oblong 22 pratiqué sur l'autre extrémité du premier élément 20.

La différence entre la plus grande dimension des trous oblongs 24, 22, choisie le long de la course différentielle entre les premier 20 et second 31, 32 éléments, et le diamètre du trou circulaire 23 ou 21, permet d'établir un jeu fonctionnel dans la liaison mécanique entre les premier et second éléments. Il en résulte que le jeu fonctionnel entre les deux éléments 20 et 31 est contrôlé par le moyen fluidique de transfert de vibrations 26 entre les premier 20 et second 31 éléments. Le moyen fluidique de transfert 26 des vibrations, de forme fluidique ou hydraulique, est proportionné aux charges fatigue préalablement calculées. Lorsque la charge appliquée au dispositif de liaison de sécurité est inférieure à un seuil calculé, les vibrations produites par le premier et/ou le second corps se traduisent en mouvement alternatif du second élément 31 à l'intérieur du premier élément 20. Le mouvement alternatif vibratoire est alors transmis par le piston 29 dans les chambres 27 et 28 qui font varier les pressions dans des tubulures de connexion au système 42 de filtrage des vibrations (voir figure 2). Cette connexion fluidique permet l'intervention du système fluidique de transfert de vibrations 42 à distance du dispositif de sécurité.

Lorsque la charge augmente encore, la course du second élément 31 dans le premier élément 20 du dispositif de liaison de l'invention entraîne en butée les axes ou goupilles de solidarisation des premier 4 et second 5 corps dans les trous oblongs pratiqués sur le premier élément 20. Le dispositif de liaison ne fonctionne plus alors en mode d'amortissement fluidique ou hydraulique, mais en mode de déformation rigide de ses premier 20 et second 31 éléments. Les vibrations du premier 4 et/ou du second 5 corps ne sont plus alors transmises par le moyen fluidique de transfert de vibrations 26 de type fluidique ou hydraulique.

Dans une application de l'invention, un moteur d'avion monté dans sa nacelle est solidarisé à un mat d'accrochage sous le fuselage arrière de l'avion. Dans ce cas, la solidarisation du moteur se fait par l'intermédiaire d'une bielle et/ou d'une manille sur le mat d'accrochage. Préférentiellement, pour des questions de fiabilité et de sécurité, la manille est alors doublée sans jeu. La bielle travaille en reprise d'efforts de la manille doublée. Selon l'invention, en utilisant comme bielle un dispositif de liaison de sécurité selon l'invention, les vibrations produites par le moteur sont intégralement transmises au dispositif de l'invention. Ce dernier, grâce au moyen fluidique de transfert de vibrations 26, par transfert de vibrations à un système 42 (Fig.2) gazeux de filtrage des vibrations, dans une gamme de charges déterminées, permet d'une part de filtrer les vibrations et d'autre part de solidariser le moteur au mât d'accrochage à titre de bielle avec disposition de sécurité en cas de cassure de l'un des deux éléments du premier ou du second élément du dispositif de liaison. Le doublement en parallèle de la manille assure la même sécurité dans le système d'accrochage. Ainsi, il n'est pas nécessaire de rechercher un filtrage des vibrations au niveau de la double manille, ce qui serait extrêmement pénalisant au point de vue de la conception. En effet, le filtrage des vibrations au niveau de la ou des bielles du système d'accrochage bielle-manille est efficace sur la seule bielle.

A la Figure 2, on a représenté une application du principe de filtrage de l'invention en déportant à distance le dispositif de filtrage des vibrations de la Figure 1. Le dispositif de liaison de sécurité 40 coopère avec un système 42 de filtrage gazeux des vibrations.

Dans un mode de réalisation, le système 42 de filtrage gazeux des vibrations comporte un distributeur 52 analogue au moyen fluidique de transfert de vibrations 26. Le distributeur 52, qui sera décrit plus en détail, comporte un moyen de remplissage d'huile lors de la fabrication du dispositif de liaison de l'invention et en maintenance. Préférentiellement, le moyen de remplissage d'huile coopère avec un moyen d'appoint d'huile pour compenser les fuites d'huile ainsi qu'un capteur de niveau d'huile pour commander le moyen d'appoint d'huile. Le distributeur 52 du système 42 de filtrage gazeux des vibrations permet de recevoir et traiter à distance les vibrations échangées entre les premier 30 et second 31 éléments du dispositif de liaison de sécurité d'une part et d'effacer les chocs subis par le système de jeu fonctionnel calculé d'autre part. La partie pneumatique ou aéraulique du système 42 de filtrage gazeux des vibrations est dimensionnée de manière à filtrer les vibrations échangées entre les premier 30 et second 31 éléments du dispositif de liaison de sécurité. La partie gazeuse ou pneumatique du système 42 de filtrage gazeux des vibrations est configurée en filtre passe-bas pour les vibrations transmises par la partie hydraulique.

A cette fin, la partie pneumatique du système 42 de filtrage gazeux des vibrations associé au dispositif de liaison de sécurité de l'invention comporte un réservoir d'air 56 qui est connecté fluidiquement par un réseau de distribution d'air sous pression 57 à un jeu 58 de chambres d'air montées autour d'une tige 59 à laquelle les chambres sont solidarisées. La partie pneumatique est configurée en filtre passe-bas des vibrations transmises par la tige 59. A cette fin, la tige 59 est mécaniquement couplée avec une partie mobile de la partie hydraulique du système 42 de filtrage gazeux des vibrations. Ainsi la partie hydraulique du système 42 de filtrage gazeux des vibration est configurée de manière à ce que la tige 59 traverse un amortisseur hydraulique 54, puis se connecte au piston 55 d'un distributeur de pression 52. Le distributeur de pression 52 comporte deux chambres, respectivement 51 et 53, séparées par le piston de distribution 55. Deux flexibles 48 et 50 permettent de connecter les deux chambres 51, 53 du distributeur 52 aux deux chambres contrôlées respectivement 27 et 28 du moyen fluidique de transfert de vibrations 26 du dispositif de liaison 40.

Dans le mode de réalisation de la Figure 2, en dimensionnant correctement le système 42 de filtrage gazeux des vibrations, on parvient à contrôler à distance la pression instantanée dans le moyen de transfert de vibrations 26. Une fonction supplémentaire du système 42 de filtrage gazeux des vibrations est d'effacer ou d'amortir le choc appliqué par le dispositif de liaison 40 quand il sort du mode de filtration des vibrations lorsque la course relative du second élément 31 dans le premier élément 20 dépasse le jeu fonctionnel assuré par les oblongs qui permettent de solidariser les deux éléments.

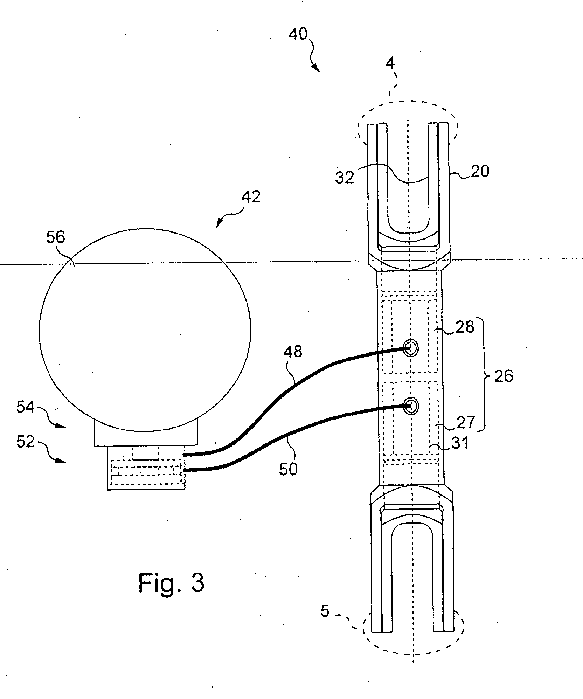

A la Figure 3, on a représenté un autre mode de réalisation du système 42 de filtrage gazeux des vibrations dans lequel on a supprimé le jeu de chambres 58. La pression du réservoir d'air sous pression 56 est directement appliquée sur un diaphragme, non représenté, successivement à une tige centrale de l'amortisseur hydraulique 54, puis du piston de distribution 55 du distributeur 52, relié par les flexibles 48 et 50 au dispositif de liaison 40. La pression du réservoir d'air est déterminée de manière à réaliser un filtrage passe-bas des vibrations captées par le distributeur constituant le moyen de transfert de vibrations 26. Le distributeur 52 du système 42 fait entrer en vibration la tige 59 à travers le cas échéant l'amortisseur liquide 54 et la tige 59 (non représentée à la Figure 3) reliée à un piston et/ou diaphragme chargé par le réservoir d'air 56 filtre les vibrations. Il en résulte que la tige 59 est freinée par le filtre gazeux et son effet est transféré par les tubulures 48 et 50 au moyen de transfert de vibrations 26. De ce fait, les deux éléments mécaniquement solidaires des chambres 27 et 28 sont eux aussi freinés et les vibrations entre les corps solidarisés 4 et 5 sont filtrées efficacement.

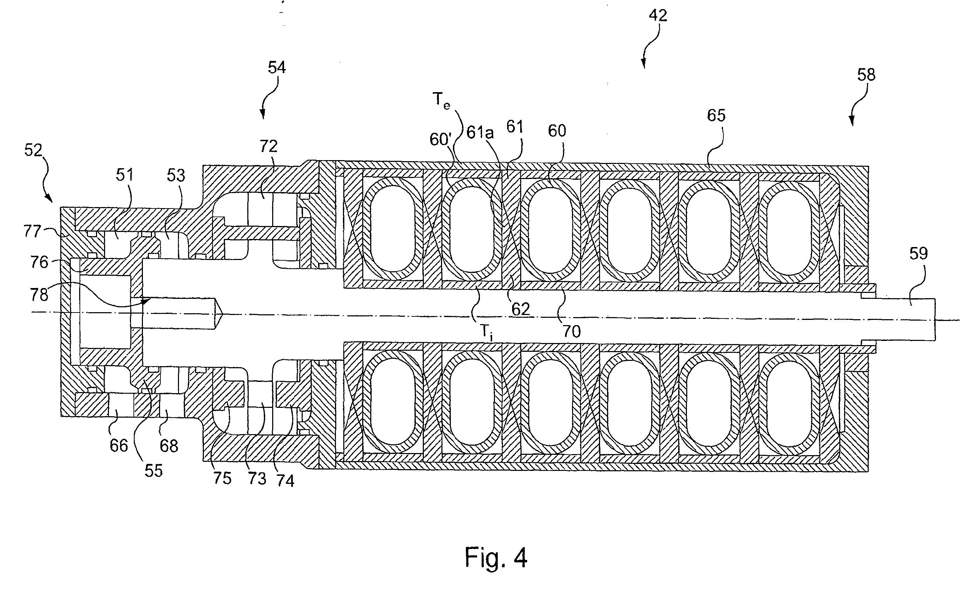

A la Figure 4, on a représenté un mode particulier de réalisation du système 42 de filtrage gazeux des vibrations. La tige 59 du système 42 de filtrage gazeux des vibrations traverse le jeu 58 de chambres d'air. Dans le mode de réalisation décrit, le jeu de chambres d'air 58 combine en série six chambres. Dans chaque chambre d'air est disposé un tore souple, comme le tore 60, réalisé en élastomère comme ceux produits par la société Firestone™. Chaque tore 60 est connecté au réservoir d'air comme le réservoir d'air 56 de la Figure 2. Chaque tore est réalisé en un élastomère étanche comportant une valve (non représentée) de connexion au réseau de tubulures de liaison au réservoir d'air sous pression 56 (Figure 2). La pression moyenne est sélectionnée entre 10 et 30 bars dans l'application du dispositif de liaison de l'invention à l'accrochage d'un moteur d'aéronef sous le fuselage arrière.

Les tores du jeu 58 de chambres d'air sont insérés entre des rondelles comme les rondelles 61 et 62. A chaque niveau entre deux tores successifs, une rondelle externe 61, dont le centre est évidé, est solidaire de la paroi 65 extérieure du jeu de chambres d'air 58. De même, une rondelle interne 62 est solidaire de la tige centrale 63. Les rondelles interne 62 et externe 61 sont libres l'une par rapport à l'autre. La pression des tores inférieur 60' et supérieur 60 autour de chaque paire de rondelles 61, 62 est transmise aux deux rondelles par l'intermédiaire d'anneaux respectivement supérieur 61a et inférieur 62a. Ces deux anneaux permettent de conserver un contact sans glissement respectivement avec le tore supérieur 60 pour l'anneau supérieur 61a et avec le tore inférieur 60' pour l'anneau inférieur 62a. Dans le même temps, un contact glissant est assuré entre les anneaux 61a et 62a avec le bord intérieur de la rondelle extérieure 61 et avec le bord extérieur de la rondelle intérieure 62. Le bord en contact intérieur de la rondelle extérieure 61 avec le bord de l'anneau inférieur 61 a d'une part et le bord en contact intérieur de la rondelle intérieure 62 avec le bord de l'anneau supérieur 62a d'autre part, sont taillés en biseau et sont réalisés en matériau assurant un glissement relatif. Cette disposition dans la partie pneumatique du système 42 permet de transmettre un déplacement de la tige 63, quand elle est entraînée par des variations de pression détectées sur le moyen fluidique de transfert de vibrations 26 du dispositif de liaison 40 (Figure 2), sur les tores 60, 60' qui se déforment alors selon une loi dépendant principalement de la pression d'air dans le réservoir 56.

Pour appliquer un déplacement à la tige 59, le distributeur 52 monté à l'extrémité gauche du système 42 gazeux de filtrage des vibrations de la Figure 4, est connecté par un trou 66 et par un trou 68 aux chambres correspondantes du dispositif de liaison 40 (Figure 2). Chaque trou 66 ou 68 débouche dans une chambre respectivement 51 et 53 du distributeur 52, séparées l'une de l'autre par un piston de distribution 55. Le piston de distribution 55 comporte une chemise 76 qui vient dans un alésage d'un bouchon 77 qui ferme l'extrémité gauche au dessin du distributeur 52. L'étanchéité est assurée par deux segments non référencés. En fonction des déplacements relatifs des premier et second éléments du dispositif de liaison (voir Figures 1 à 3), ou des variations de pression entre les chambres 27 et 28 (Figure 1) ou 44, 46 (Figures 2 et 3), les variations de pression dans le distributeur 52 sont converties en un mouvement de translation alternatif sur la tige 59 qui est liée au piston de distribution 55 par une fixation 78.

Entre le distributeur 52 et le jeu de chambres d'air 58, a été interposé un amortisseur hydraulique 54. L'amortisseur hydraulique 54 comporte une plaque en forme de disque 72 qui est intégrale avec le pied de la tige 63. Un montage annulaire 75 est muni de perçages destinés à mettre en relation les différentes parties du volume de l'amortisseur hydraulique 54 par un ou plusieurs passages ou trous 73 pratiqués sur la plaque annulaire 72 intégrale avec la tige 63. Il en résulte que, dans les débattements moyens, l'huile contenue dans l'amortisseur hydraulique peut passer à travers le trou 73 et applique un freinage sur les mouvements de la tige 63.

Ainsi qu'on le verra plus loin, en dehors de cette position médiane, la plaque 75 obstrue complètement le trou 73 et n'applique plus aucun amortissement lorsque l'une des chambres a atteint une dépression suffisante. Cette situation est atteinte lorsque la course relative des premier et second éléments du dispositif de liaison a atteint une valeur extrême dans un sens ou dans l'autre, transmis à distance par la partie hydraulique du système de filtrage 42. Cette situation est obtenue par construction du dispositif de liaison proprement dit et du système 42 de filtrage des vibrations distant et est identique à celle dans laquelle les limites du jeu fonctionnel déterminé par les attaches des premier 20 et second 31 éléments du dispositif de liaison sont atteintes.

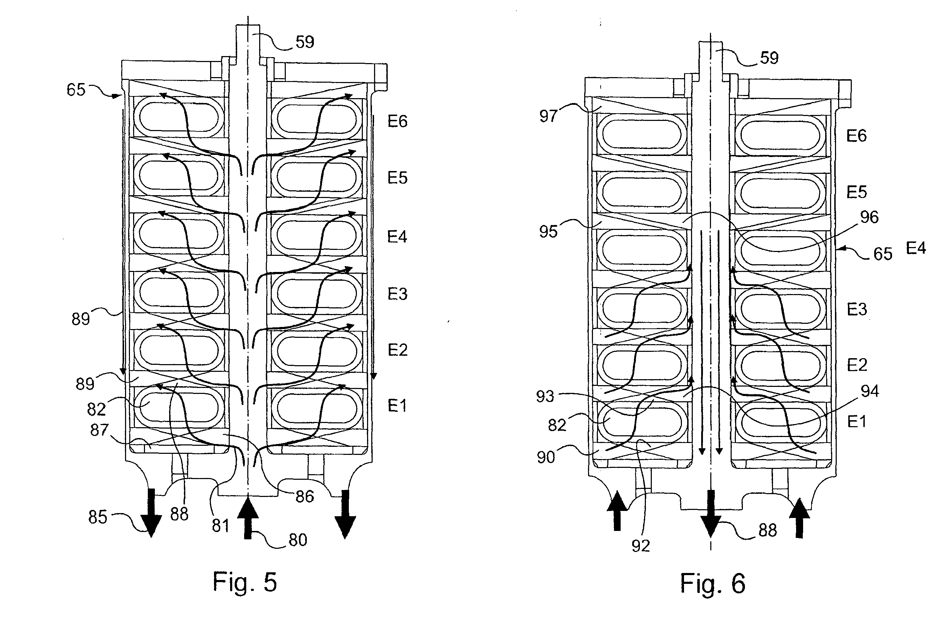

Dans le mode de réalisation des Figures 5 et 6, on a repris le jeu de chambres d'air de la Figure 4, chacune comportant un tore élastomère sous pression d'air, et un jeu d'une rondelle interne, d'une rondelle externe en contacts glissants avec des anneaux supérieur et inférieur. et d'une rondelle interne, jeu déjà décrit. Ce jeu est complété par un tube intérieur Ti, solidaire de la tige 59 (Figures 4, 5 et 6), et par un tube extérieur Te qui peut glisser le long de la paroi intérieur du carter 65 (Figures 4, 5, 6). Avec cette disposition, la tige 59 peut se déplacer par rapport au carter 65 et les efforts sont transmis de l'une à l'autre par l'intermédiaire des tores et des planchers de séparation entre chambres d'air, chaque plancher étant constitué par un jeu de rondelles interne et externe et d'anneaux supérieur et inférieur.

Lorsque la tige 63 travaille en compression (Figure 5), les efforts appliqués à la tige 63 sont appliqués selon la flèche 80. Sur les trois derniers planchers de rondelles interne et externe, on a ménagé une disposition qui empêche tout mouvement en dehors du sens de la compression. Si la tige 59 redescend dans le sens contraire à la flèche 80, les rondelles interne et externe entrent en contact et ajoutent une résistance au mouvement des tores qui sont insérés entre les deux étages de rondelles internes et externes.

Par contre, les étages suivants de rondelles internes et externes travaillent dans les deux sens. Ainsi lorsque un effort est appliqué sur la tige 59 selon la flèche 80, l'effort est transmis à un tore 82, d'abord par une rondelle interne 81, puis à la rondelle externe 83 de l'étage suivant et ainsi de suite le long du chemin des étages suivants le long de la tige 59. Les efforts sont alors repris par la paroi extérieure 65 dans la direction de la flèche 84 et viennent s'appliquer au carter non représenté aux Figures 5a de l'amortisseur hydraulique 54. Le carter ou paroi extérieure constitue ainsi un moyen de reprise des efforts échangés entre la tige 59 et les tores 60, 60' de filtrage des vibrations.

A la Figure 6, on a représenté le jeu de chambres d'air 58 travaillant dans un mode de tension. Les efforts sont appliqués sur la tige 59 selon la flèche 88 et la reprise d'effort sur le carter de l'amortisseur hydraulique 54 est fait selon les flèches 89.

De même, les efforts impliqués sur la tige 59, sur les étages de rondelles et de tores sont repris depuis une rondelle externe 90 sur le tore 91 puis sur la rondelle interne 92. L'effort est enfin appliqué sur la tige 59 selon la flèche 88.

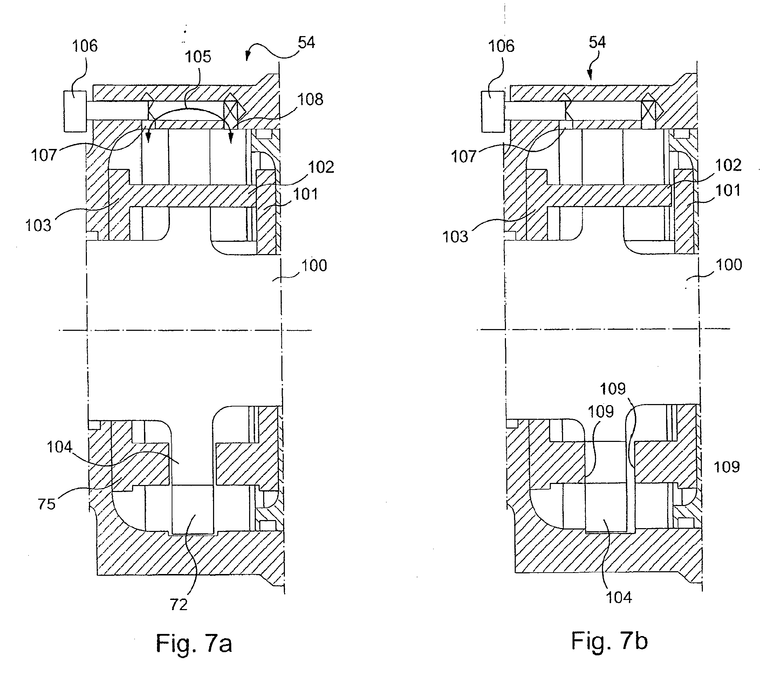

Aux Figures 7a et 7b, on a représenté un état de fonctionnement de l'amortisseur hydraulique 54 du mode de réalisation du système 42 de filtrage gazeux des vibrations de la Figure 4.

La plaque 72 représentée à la Figure 4 a été à nouveau représentée sur la Figure 6a solidaire d'une partie de la tige 59 (Figure 4). La plaque annulaire 72 est percée de trous comme le trou 104. Le trou 104 est en regard d'un dispositif annulaire 75 de sorte que dans un fonctionnement moyen de la plaque 72, l'huile sous pression dans l'amortisseur 54 peut passer par ailleurs par un ajutage 105, dans la partie supérieure du dessin. Cet ajutage 105 permet, par des trous 107 et 108, une circulation d'huile de part et d'autre de la plaque 72. Le passage d'huile entre les deux parties est rendu possible par le réglage d'une vis 106 qui permet de diminuer ou d'augmenter le passage. Les déplacements d'huile ont donc lieu essentiellement par ce passage ou par les trous dans le piston ou sa plaque annulaire.

La partie 100 de tige est guidée par des colonnes 102 pénétrant dans des trous non représentés sur la plaque annulaire 72.

A la Figure 7b, on a représenté la position de l'amortisseur hydraulique 54 quand la tige 100 est parvenue dans une position extrême, ici à gauche. Une telle position extrême est atteinte, grâce à un dimensionnement correct du dispositif de liaison 40 proprement dit et du système associé 42 de gazeux de filtrage des vibrations, lorsque un axe ou goupille de solidarisation du premier 4 et/ou du second 5 corps (Figures 1 ou 2), solidarisés par le dispositif de liaison 40, entre en contact avec le fond du trou oblong 22 ou 24 (Figure 2). Cette disposition permet de réduire l'effet de choc qui marquerait sinon la fin du mode fluidique de transfert de vibrations quand le dispositif de liaison a atteint une première limite de charge. Dans ce cas, le trou 104 est complètement bouché par le doigt 109 de la plaque annulaire et le freinage appliqué à la tige 59 est maximum.

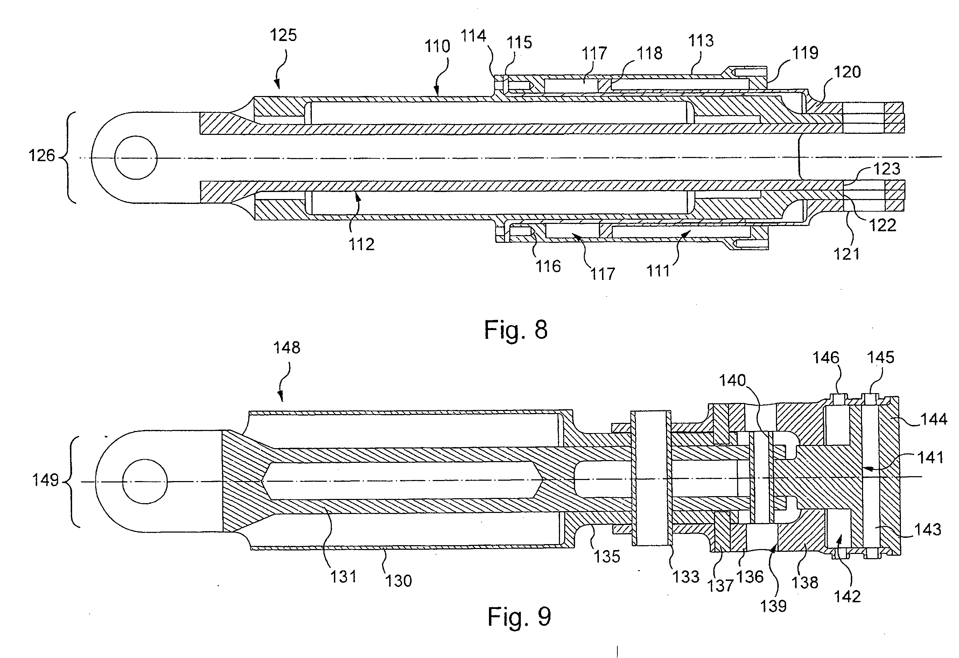

A la Figure 8, on a représenté un deuxième mode de réalisation d'un dispositif de liaison selon l'invention. Dans le mode de réalisation de la Figure 8, le moyen fluidique de transfert de vibrations n'est plus disposé à l'intérieur de l'espace compris entre la première portion tubulaire 110 et la deuxième portion tubulaire 112 concentriques des premier 125 et second 126 éléments du dispositif de liaison. Dans ce deuxième mode de réalisation, le moyen fluidique de transfert de vibrations est à l'extérieur de la portion tubulaire110 la plus extérieure au dispositif de liaison.

A la Figure 8, la première portion tubulaire 110 du premier élément 125 du dispositif de liaison présente une saillie périphérique formant un anneau périphérique intégral 114. Sur cet anneau 114 vient en butée le bord plié d'une douille cylindrique 115 coaxiale aux première et seconde portions tubulaires 110 et 112. Un tube cylindrique 113, concentrique aux première et seconde portions tubulaires 110 et 112, entoure l'ensemble et présente un bord à gauche au dessin en contact avec le bord plié de la douille 115. Une pluralité de trous taraudés dans l'anneau 114, le bord plié de la douille 115 et le bord à gauche du tube 114 permettent leur solidarisation par des vis (non représentées).

Par ailleurs, un piston 118 est prévu dans l'espace 111, 117 ménagé entre l'extérieur de la première portion tubulaire 110 et le tube 113 pour constituer les deux chambres de pression hydraulique du moyen fluidique de transfert de vibrations. Le piston 118 est produit par un formage du bord à gauche d'un tube 120 cylindrique et concentrique avec la première portion tubulaire 110. Du côté droite au dessin, un couvercle 119 ferme l'autre extrémité de sorte que la chambre de pression 111 soit fermée de manière étanche.

La seconde portion tubulaire 112 appartenant au second élément 126 du dispositif de liaison de l'invention, est enfin placée concentriquement aux autres portions tubulaires et à l'intérieur du montage. Les première 110 et seconde 112 portions tubulaires ainsi que le tube 120 porteur du piston 118 de séparation des chambres hydrauliques 111, 117 sont solidarisées avec un jeu fonctionnel par des trous oblongs 122 et 123 qui viennent sur un axe ou goupille non représenté, installé dans un trou circulaire 121 pratiqué à l'extrémité du tube 120, porteur du piston 118 de séparation des deux chambres hydrauliques 111, 117.

Tant que l'axe ou goupille (non représenté) dans le trou 121 ne vient pas en contact avec l'un des bords des trous oblongs, les mouvements du tube 120 sont freinés et filtrés par le piston 118 dans les chambres 111 et 117 ainsi qu'il a été indiqué pour l'autre mode de réalisation.

A la Figure 9, on a représenté un troisième mode de réalisation d'un dispositif de liaison selon l'invention. Dans ce mode de réalisation, les premier 148 et second 149 éléments présentent des portions tubulaires concentriques, respectivement 130 extérieure et 131 intérieure. Les accrochages aux premier et second corps (non représentés à la Figure 9) sont situés de part et d'autre de ces portions tubulaires et ne seront pas décrits plus avant de même que leurs jeux fonctionnels calculés.

Le moyen fluidique de transfert de vibrations qui permet de coupler la première portion tubulaire 130 à la deuxième portion tubulaire 131 a été monté en dehors d'une relation concentrique sur la tête supérieure du dispositif de liaison de l'invention. Une pièce cylindrique 138 comporte une base pleine et une coupelle de tête, de forme générale cylindrique coaxiale avec les première 130 et seconde 131 portions tubulaires, dans laquelle sont aménagées deux chambres hydrauliques 143 et 142, séparées par un piston 141. La chambre 143 la plus à droite du dessin est fermée par un couvercle 144. L'huile distribuée et freinée par le système 42 de mise en pression et de contrôle de pression de la Figure 4 est transmise par des flexibles non représentés par des trous 146 et 145 communiquant avec les deux chambres 142 et 143.

Le piston 141 est mobile entre les deux chambres 142, 143 et monté sur un axe 140 à l'extrémité droite sur le dessin de la portion tubulaire 131 du second élément. L'axe 140 peut se déplacer librement dans un trou oblong 139 pratiqué dans la pièce cylindrique 138 sur laquelle ont été formées les deux chambres 142 et 143 du moyen de filtrage des vibrations de l'invention.

La première portion tubulaire 130 est ensuite solidarisée par un axe ou goupille 137 avec l'extrémité 136 la plus à gauche sur le dessin de la pièce cylindrique 138.

Les efforts sont ensuite repris sur un axe 133 pénétrant dans des perçages communs à la partie cylindrique 136, à la première portion tubulaire 130 et à la seconde portion tubulaire 131.

De ce qui précède, on remarque que la configuration du dispositif de liaison assure trois phases distinctes de fonctionnement :
- quand les charges sont inférieures à des charges fatigue, les vibrations sont filtrées par le réservoir d'air qui reçoit les mouvements appliqués par les mouvements de pression dans les parties hydrauliques ;
- quand les charges sont au-dessus des charges de fatigue, les vibrations ne sont plus filtrées ; et
- lors de fluctuations entre la charge de fatigue et les variations de charge, notamment lorsque la liaison à jeu fonctionnel parvient en bout de course, les chocs produits sont absorbés par l'amortissement hydraulique.

On remarque que le concept d'amortissement fluidique ou hydraulique utilise une égalité des pressions entre les deux parties de chambre séparées par la plaque annulaire asservie au mouvement de la tige.

## Revendications

1. Dispositif de liaison de sécurité d'un ensemble bielle-manille reliant un premier corps d'une structure vibrante (4) à un second corps (5) de ladite structure comprenant :
- un premier élément (20) ayant une extrémité de liaison adaptée à être liée audit premier corps (4), une extrémité de liaison adaptée à être liée audit second corps (5) ;
- un second élément (31) ayant une extrémité de liaison adaptée à être liée audit premier corps (4), une extrémité de liaison adaptée à être liée audit second corps (5) ;
les premier (20) et second (31) éléments du dispositif de liaison étant liés entre eux par un moyen fluidique de transfert de vibrations (26) produites par les premier et second corps transmises par les liaisons aux premier (4) et second (5) corps, au moins sous un seuil d'effort déterminé, ledit moyen fluidique de transfert de vibrations (26) comportant au moins deux chambres de pression (27, 28) remplies d'un liquide sous pression, séparées par au moins un piston (29) solidaire du premier (20) ou du second (31) élément, **caractérisé en ce que** le moyen fluidique de transfert de vibrations (26) étant connecté par des tubulures (48, 50) à distance à un dispositif de filtrage des vibrations (52 - 56) comportant un distributeur (52) à deux chambres, connectées auxdites tubulures (48, 50) et séparées par un piston de distribution (55) soumis à l'action de filtrage des vibrations d'au moins une réserve (56) d'un gaz sous pression déterminée.

2. Dispositif de liaison conforme à la revendication 1, **caractérisé en ce que**, le premier élément (20) comportant une portion tubulaire (38) s'étendant selon un axe longitudinal et le second élément (31) comportant une portion tubulaire (30) s'étendant selon un axe longitudinal, le moyen fluidique de transfert de vibrations (26) est monté concentriquement de manière déterminée à l'intérieur, à l'extérieur ou à l'une des extrémités des deux portions tubulaires (38, 30).

3. Dispositif de liaison conforme à l'une quelconque des revendications précédentes, **caractérisé en ce que** les premier (20 ; 130) et second (31 ; 131) éléments sont liés de plus par au moins une liaison à jeu fonctionnel calculée (20, 24 ; 21, 22) de façon à ce que le moyen fluidique de transfert de vibrations (26) soit actif jusqu'à un niveau de charge déterminé sur le dispositif de liaison.

4. Dispositif de liaison conforme à la revendication 3, **caractérisé en ce que** la liaison à jeu fonctionnel calculé comporte au moins un trou oblong (22, 24) pratiqué sur l'un (20, 31) parmi lesdits premier (20) et second (31) éléments destiné à coopérer par un axe ou goupille avec un autre trou (21, 23) de diamètre plus petit que la dimension du trou oblong, le trou de diamètre plus petit étant pratiqué sur l'autre (31, 20) parmi lesdits premier (20) et second (31) éléments, de sorte que l'axe ou goupille puisse suivre un mouvement vibratoire dans la direction du trou oblong dans la limite du jeu fonctionnel calculé.

5. Dispositif de liaison conforme à l'une quelconque des revendications 1 à 4, **caractérisé en ce que** le piston de distribution (55) coopère avec un amortisseur fluidique (54) configuré pour amortir les mouvements du piston de distribution (55).

6. Dispositif de liaison conforme à l'une quelconque des revendications 1 à 5, **caractérisé en ce que** le réservoir de gaz sous pression (56) du dispositif de filtrage des vibrations est connecté à un tore élastique (60) introduit dans chaque chambre d'une pluralité de chambres de gaz (58) dont le volume est asservi, par une tige (59) et des rondelles associées (59 ; 63), aux déplacements du piston de distribution (55) pour filtrer les vibrations transmises par les premier (20) et second (31) éléments dans un mode de filtrage des vibrations.

7. Dispositif de liaison conforme à la revendication 6, **caractérisé en ce que**, entre chaque chambre de gaz (58), sont disposées :
- une rondelle intérieure (62) solidaire du piston de distribution (55) ;
- une rondelle extérieure (61) solidaire d'une partie (65) de reprise d'efforts du dispositif de filtrage des vibrations ;
les rondelles intérieure et extérieure étant configurées de manière à permettre un filtrage des vibrations dans les deux sens de déplacement du piston de distribution.

8. Dispositif de liaison conforme à la revendication 5, **caractérisé en ce que** l'amortisseur fluidique (54) coopérant avec le piston de distribution (55) comporte au moins deux chambres (107, 108) séparées par un piston d'amortissement (72) et reliées par une pluralité de passages (104, 105) de fluide d'amortissement.

9. Dispositif de liaison conforme à la revendication 8, **caractérisé en ce que**, au moins en un bout de course du piston de distribution (55), l'amortissement apporté par l'amortisseur fluidique (54) du dispositif de filtrage des vibrations (52 - 56) est maximisé par la neutralisation d'une pluralité de passages (104) de fluide d'amortissement.

10. Aéronef, **caractérisé en ce qu'**il comporte un dispositif de liaison de sécurité selon l'une quelconque des revendications 1 à 9 pour lier un turbo réacteur à un mat d'accrochage.

## Patentansprüche

1. Sicherheitsverbindungsvorrichtung zum Verbinden einer Pleuel-Schäkel-Baugruppe, welche einen ersten Körper einer Vibrationsstruktur (4) mit einem zweiten Körper (5) der genannten Struktur verbindet, enthaltend:
- ein erstes Element (20) mit einem Verbindungsende, das dazu ausgelegt ist, mit dem ersten Körper (4) verbunden zu werden, sowie mit einem Verbindungsende, das dazu ausgelegt ist, mit dem zweiten Körper (5) verbunden zu werden,
- ein zweites Element (31) mit einem Verbindungsende, das dazu ausgelegt ist, mit dem ersten Körper (4) verbunden zu werden, sowie mit einem Verbindungsende, das dazu ausgelegt ist, mit dem zweiten Körper (5) verbunden zu werden,
wobei das erste (20) und das zweite Element (31) der Verbindungsvorrichtung über ein fluidisches Übertragungsmittel (26) zum Übertragen von dem ersten und dem zweiten Körper erzeugten Vibrationen miteinander verbunden sind, die von den Verbindungen mit dem ersten (4) und dem zweiten Körper (5) übertragen werden, und zwar zumindest unter einem bestimmten Kraftgrenzwert, wobei das fluidische Übertragungsmittel (26) zum Übertragen von Vibrationen zumindest zwei Druckkammern (27, 28) aufweist, die mit einer Druckflüssigkeit gefüllt sind und durch zumindest einen fest mit dem ersten (20) oder dem zweiten Element (31) verbundenen Kolben (29) getrennt sind,
**dadurch gekennzeichnet, dass**
das fluidische Übertragungsmittel (26) zum Übertragen von Vibrationen über Rohrstücke (48, 50) auf Abstand mit einer Filtervorrichtung (52 - 56) zum Filtern von Vibrationen verbunden ist, die einen Verteiler (52) mit zwei Kammern aufweist, die mit den Rohrstücken (48, 50) verbunden und durch einen Verteilerkolben (55) getrennt sind, welcher der Wirkung der Vibrationsfilterung von zumindest einem Vorrat (56) von Druckgas ausgesetzt ist, das unter einem bestimmten Druck steht.

2. Verbindungsvorrichtung nach Anspruch 1,
**dadurch gekennzeichnet , dass**
bei einem ersten Element (20) mit einem rohrförmigen Abschnitt (38), der sich entlang einer Längsachse erstreckt, und bei einem zweiten Element (31) mit einem rohrförmigen Abschnitt (30), der sich entlang einer Längsachse erstreckt, das fluidische Übertragungsmittel (26) zum Übertragen von Vibrationen in bestimmter Weise innerhalb, außerhalb oder an einem der Enden der beiden rohrförmigen Abschnitte (38, 30) konzentrisch gelagert ist.

3. Verbindungsvorrichtung nach einem der vorangehenden Ansprüche,
**dadurch gekennzeichnet , dass**
das erste (20; 130) und das zweite Element (31; 131) ferner über zumindest eine Verbindung (20, 24; 21, 22) mit berechnetem Funktionsspiel so verbunden sind, dass das fluidische Übertragungsmittel (26) zum Übertragen von Vibrationen bis zu einem bestimmten Belastungsniveau auf der Verbindungsvorrichtung aktiv ist.

4. Verbindungsvorrichtung nach Anspruch 3,
**dadurch gekennzeichnet, dass**
die Verbindung mit berechnetem Funktionsspiel zumindest ein Langloch (22, 24) aufweist, das in einem (20, 31) aus erstem (20) und zweitem (31) Element ausgeführt und dazu bestimmt ist, über eine Achse bzw. einen Stift mit einem weiteren Loch (21, 23) zusammenzuwirken, das im Durchmesser kleiner als die Abmessung des Langlochs ist, wobei das im Durchmesser kleinere Loch an dem anderen (31, 20) aus erstem (20) und zweitem (31) Element ausgeführt ist, so dass die Achse bzw. der Stift einer Vibrationsbewegung in Richtung des Langlochs bis zur Grenze des berechneten Funktionsspiels folgen kann.

5. Verbindungsvorrichtung nach einem der Ansprüche 1 bis 4,
**dadurch gekennzeichnet , dass**
der Verteilerkolben (55) mit einem Fluiddämpfer (54) zusammenwirkt, der so ausgebildet ist, dass er die Bewegungen des Verteilerkolbens (55) dämpft.

6. Verbindungsvorrichtung nach einem der Ansprüche 1 bis 5,
**dadurch gekennzeichnet , dass**
der Druckgasvorrat (56) der Filtervorrichtung zum Filtern von Vibrationen mit einem elastischen Torus (60) verbunden ist, der in jede Kammer einer Mehrzahl von gasgefüllten Kammern (58) eingeführt ist, deren Volumen über eine Stange (59) und zugeordneten Scheiben (59; 63) den Verlagerungen des Verteilerkolbens (55) folgt, um die von dem ersten (20) und dem zweiten Element (31) übertragenen Vibrationen in einem Vibrationsfiltermodus zu filtern.

7. Verbindungsvorrichtung nach Anspruch 6,
**dadurch gekennzeichnet , dass**
zwischen jeder gasgefüllten Kammer (58) angeordnet sind:
- eine Innenscheibe (62), die fest mit dem Verteilerkolben (55) verbunden ist;
- eine Außenscheibe (61), die fest mit einem Kraftübernahmeabschnitt (65) der Filtervorrichtung zum Filtern von Vibrationen verbunden ist;
wobei die Innen- und die Außenscheibe so ausgebildet sind, dass sie ein Filtern der Vibrationen in den beiden Verlagerungsrichtungen des Verteilerkolbens gestatten.

8. Verbindungsvorrichtung nach Anspruch 5,
**dadurch gekennzeichnet , dass**
der Fluiddämpfer (54), der mit dem Verteilerkolben (55) zusammenwirkt, zumindest zwei Kammern (107, 108) aufweist, die durch einen Dämpfungskolben (72) getrennt und über eine Mehrzahl von Durchgängen (104, 105) für Dämpfungsfluid verbunden sind.

9. Verbindungsvorrichtung nach Anspruch 8,
**dadurch gekennzeichnet , dass**
zumindest an einem Wegende des Verteilerkolbens (55) die von dem Fluiddämpfer (54) der Filtervorrichtung (52 - 56) zum Filtern von Vibrationen (52 - 56) erbrachte Dämpfung durch die Neutralisierung einer Mehrzahl von Durchgängen (104) für Dämpfungsfluid maximiert wird.

10. Luftfahrzeug,
**dadurch gekennzeichnet , dass**
es zumindest eine Sicherheitsverbindungsvorrichtung nach einem der Ansprüche 1 bis 9 zum Verbinden eines Strahltriebwerks mit einem Aufhängungsmast aufweist.

## Claims

1. A device for safety linking of a crank-connecting rod system linking a first member of a vibrating structure (4) to a second member (5) of the said structure, comprising:
- a first element (20) having one link end adapted to be linked to the said first member (4), one link end adapted to be linked to the said second member (5);
- a second element (31) having one link end adapted to be linked to the said first member (4), one link end adapted to be linked to the said second member (5);
the first (20) and second (31) elements of the link device being linked to one another by a fluidic means for transferring vibrations (26) generated by the first and second members and transmitted by the links to the first (4) and second (5) members, at least below a specified force threshold, the said fluidic vibration-transferring means (26) being provided with at least two pressure chambers (27, 28) filled with a pressurized liquid, separated by at least one piston (29) integral with the first (20) or second (31) element, **characterized in that** the fluidic vibration-transferring means (26) being connected by flexible tubes (48, 50) to a remote vibration-filtering device (52 - 56) provided with a distributor (52) having two chambers, connected to the said flexible tubes (48, 50) and separated by a distribution piston (55) subjected to the vibration-filtering action of at least one tank (56) of a gas under specified pressure.

2. A link device according to claim 1, **characterized in that**, the first element (20) being provided with a tubular portion (38) extending along a longitudinal axis and the second element (31) being provided with a tubular portion (30) extending along a longitudinal axis, the fluidic vibration-transferring means (26) is mounted concentrically in specified manner in the interior, on the exterior or at one of the ends of the two tubular portions (38, 30).

3. A link device according to any one of the preceding claims, **characterized in that** the first (20; 130) and second (31; 131) elements are additionally linked by at least one link with calculated functional play (20, 24; 21, 22) so that the fluidic vibration-transferring means (26) is active up to a specified force level on the link device.

4. A link device according to claim 3, **characterized in that** the link with calculated functional play is provided with at least one oblong hole (22, 24) made on one (20, 31) of the said first (20) and second (31) elements intended to cooperate via a shaft or pin with another hole (21, 33) of diameter smaller than the dimension of the oblong hole, the hole of smaller diameter being made on the other (31, 20) of the said first (20) and second (31) elements so that the shaft or pin is able to follow a vibratory movement in the direction of the oblong hole within the limit of the calculated functional play.

5. A link device according to any one of claims 1 to 4, **characterized in that** the distribution piston (55) cooperates with a fluidic damper (54) configured to damp the movements of the distribution piston (55).

6. A link device according to any one of claims 1 to 5, **characterized in that** the compressed gas tank (56) of the vibration-filtering device is connected to an elastic torus (60) introduced into each chamber of a plurality of gas chambers (58), whose volume is slaved, by a rod (59) and associated washers (59, 63), to the displacements of the distribution piston (55) in order to filter the vibrations transmitted by the first (20) and second (31) elements in a vibration-filtering mode.

7. A link device according to claim 6, **characterized in that**, between each gas chamber (58), there are disposed:
- an interior washer (62) integral with the distribution piston (55);
- an exterior washer (61) integral with a part (65) for transferring forces of the vibration-filtering device;
the interior and exterior washers being configured so as to permit vibration filtering in both directions of displacement of the distribution piston.

8. A link device according to claim 5, **characterized in that** the fluidic damper (54) cooperating with the distribution piston (55) is provided with at least two chambers (107, 108) separated by a damping piston (72) and in communication via a plurality of damping-fluid passages (104, 105).

9. A link device according to claim 8, **characterized in that**, at one end at least of the travel of the distribution piston (55), the damping imposed by the fluidic damper (54) of the vibration-filtering device (52 - 56) is maximized by neutralization of a plurality of damping-fluid passages (104).

10. An aircraft, **characterized in that** it is provided with a safety link device according to any one of claims 1 to 9 for linking a turbojet engine to an attachment pylon.
